# EUROPÄISCHE PATENTSCHRIFT

(11) **EP 3 203 091 B1**
(45) Veröffentlichungstag und Bekanntmachung des Hinweises auf die Patenterteilung: **01.01.2020**
(21) Anmeldenummer: 16154277.4
(22) Anmeldetag: 04.02.2016
(51) Int. Cl.: F16B 7/04, F16B 7/22, F16B 12/50

(54) **ECKVERBINDUNG VON FORMSTÜCKEN**
CORNER JOINT OF MOULDED PARTS
CONNEXION D'ANGLE POUR RACCORDS

(43) Veröffentlichungstag der Anmeldung: 09.08.2017
(73) Patentinhaber: HEWI Heinrich Wilke GmbH, 34454 Bad Arolsen (DE)
(72) Erfinder: Fuchs, Andreas, 34447 Twistetal (DE); Vogel, Steffen, 34454 Bad Arolsen (DE); Widy, Oliver, 34119 Kassel (DE)
(74) Vertreter: Manitz Finsterwald Patent- und Rechtsanwaltspartnerschaft mbB

(56) Entgegenhaltungen:
- DE-U1- 20 206 813
- US-A1- 2008 298 926

## Beschreibung

Die vorliegende Erfindung betrifft eine Eckverbindung von Formstücken, insbesondere von rohrförmigen Formstücken.

Eckverbindungen von, insbesondere rohrförmigen, Formstücken sind grundsätzlich bekannt und werden beispielsweise mittels Muffen realisiert. Muffen prägen üblicherweise jedoch das Erscheinungsbild der Eckverbindung, was nicht immer erwünscht ist. Alternativ werden bekannte Eckverbindungen geschweißt, was jedoch in einer Schweißwulst resultiert, die unter Umständen unerwünscht ist und in einem Nachbehandlungsprozess entfernt werden muss.

Eine Eckverbindung von Formstücken mit den Merkmalen des Oberbegriffs des Anspruchs 1 ist aus der US 2008/0298926 A1 bekannt. Ferner ist eine Eckverbindung von rohrartigen Formstücken in der DE 202 06 813 U1 offenbart.

Eine Aufgabe der Erfindung ist es, eine Eckverbindung zu schaffen, die auf einfache Weise herstellbar ist und gleichzeitig ein ansprechendes Erscheinungsbild aufweist.

Zur Lösung der Aufgabe ist eine Eckverbindung mit den Merkmalen des Anspruchs 1 vorgesehen.

Die erfindungsgemäße Eckverbindung umfasst ein erstes Formstück mit einer ersten Stirnseite, wobei sich mindestens ein hakenartiger Fortsatz von der ersten Stirnseite erstreckt, ein zweites Formstück mit einer zweiten Stirnseite, wobei das zweite Formstück einen von der zweiten Stirnseite ausgehenden Hohlraum und eine den Hohlraum definierende Mantelwand aufweist, die mit mindestens einer Aufnahmeöffnung versehen ist, die zur Aufnahme mindestens eines hakenartigen Fortsatzes dient, und ein Verriegelungselement, das in dem Hohlraum des zweiten Formstücks drehbar gelagert aufnehmbar ist und das mindestens eine Verriegelungsöffnung aufweist, die in einer Vormontagelage des Verriegelungselements mit einer Aufnahmeöffnung des zweiten Formstücks fluchtend ausgerichtet ist, um den in der Aufnahmeöffnung aufgenommenen hakenartigen Fortsatz aufzunehmen, wobei durch Verdrehen des Verriegelungselements in eine Verriegelungslage ein Hakenabschnitt des hakenartigen Fortsatzes von dem Verriegelungselement hintergriffen wird, um das erste Formstück an dem zweiten Formstück zu verriegeln.

Der Erfindung liegt der allgemeine Gedanke zugrunde, eine mechanische bzw. formschlüssige Eckverbindung zwischen zwei Formstücken zu schaffen, bei welcher ein zur Sicherung der verbundenen Formstücke vorgesehenes Verriegelungselement im Inneren eines der Formstücke aufgenommen ist. Im Gegensatz zu Eckverbindungen, die durch stoffschlüssiges Fügen von Formstücken hergestellt werden, beispielsweise durch Schweißen, liegt bei der erfindungsgemäßen Eckverbindung an der Verbindungsstelle keine nachzubearbeitende Naht oder Wulst vor. Demnach brauchen bei der erfindungsgemäßen Eckverbindung keine aufwendigen und kostenintensiven Nachbehandlungen vorgenommen zu werden, um für ein nahtloses Erscheinungsbild der Verbindungsstelle zu sorgen. Vielmehr weist die erfindungsgemäße Eckverbindung im zusammengebauten Zustand bereits von vornherein ein nahtloses äußeres Erscheinungsbild auf, d.h. sie erweckt bei entsprechender Auswahl der verwendeten Materialien den Eindruck, als wären die miteinander verbundenen Formstücke aus einem Stück gefertigt.

Vorteilhaft ist überdies, dass die erfindungsgemäße Eckverbindung aus nur wenigen Einzelteilen besteht, wodurch sie kostengünstig herstellbar ist. Eine geringe Anzahl von Einzelteilen hat zudem eine einfache und benutzerfreundliche Montage zum Vorteil.

Noch ein weiterer Vorteil der erfindungsgemäß mechanisch bzw. formschlüssig zusammengesetzten Eckverbindung liegt darin, dass sie, insbesondere im Gegensatz zu stoffschlüssig gefügten Eckverbindungen, wieder gelöst werden kann, d.h. die Einzelteile der Eckverbindung sind austauschbar. Dadurch lassen sich zum Beispiel beschädigte Formstücke schnell und leicht auswechseln. Überdies besteht die Möglichkeit aus der Mode gekommene Formstücke einfach und kostengünstig durch Formstücke mit einem zeitgemäßen Design zu ersetzen.

Bei den Formstücken kann es sich beispielsweise um Handläufe handeln, die bevorzugt aus gleichen oder verschiedenen Metallmaterialien gefertigt sind. Selbstverständlich können auch andere Materialien, wie beispielsweise Kunststoff oder Holz, Verwendung finden. Es ist dabei unerheblich, ob die Formstücke abschnittsweise oder vollständig als rohrförmige Hohlkörper gestaltet sind, solange das zweite Formstück einen Hohlraum zur Aufnahme des Verriegelungselements definiert. Überdies ist auch denkbar, dass rohrförmig ausgebildete Formstücke zumindest abschnittsweise mit einem beliebigen Material, z.B. Schaummaterial, gefüllt sein können.

Bevorzugt ist das Verriegelungselement aus dem gleichen Material gefertigt wie die Formstücke, idealerweise aus einem Metallmaterial. Es ist aber auch möglich, das Verriegelungselement aus einem anderen Material herzustellen. Ferner ist es denkbar, dass sämtliche Einzelteile der Eckverbindung aus unterschiedlichen Materialien bestehen.

Beispielsweise findet die Eckverbindung im sanitären Bereich Anwendung, um zur Erhöhung der Sicherheit an nassen und somit rutschigen Orten, wie z.B. in Duschen, für eine Festhaltemöglichkeit zu sorgen. Es ist offensichtlich, dass die Eckverbindung aber auch woanders eingesetzt werden kann, zum Beispiel in Treppenaufgängen.

Zum Zweck der Verriegelung weiterer Formstücke an dem zweiten Formstück können beabstandet zu der mindestens einen Aufnahmeöffnung des zweiten Formstücks und der mindestens einen Verriegelungsöffnung des Verriegelungselements weitere Öffnungen an dem zweiten Formstück und dem Verriegelungselement vorgesehen sein.

Vorteilhafte Ausbildungen der Erfindungen sind den Unteransprüchen, der Beschreibung und den Zeichnungen zu entnehmen.

Um ein unbeabsichtigtes Entriegeln des Verriegelungselements zu verhindern, ist es von Vorteil, wenn Rastmittel zur Fixierung des Verriegelungselements in der Verriegelungslage vorgesehen sind.

Bevorzugt umfassen die Rastmittel mindestens eine Rastöffnung und mindestens einen federnd gelagerten Rasthaken zur Herstellung einer Rastverbindung. Für eine Demontage der Eckverbindung kann die Rastverbindung wieder gelöst werden, zum Beispiel mit einem Werkzeug. Vorzugsweise sind die mindestens eine Rastöffnung an dem zweiten Formstück und der mindestens eine Rasthaken an dem Verriegelungselement ausgebildet. Es ist aber auch denkbar, die Rastöffnung an dem Verriegelungselement und den Rasthaken an dem zweiten Formstück auszubilden.

Überdies kann der Rasthaken an einer Außenseite des Verriegelungselements angebracht sein und mit einer in dem Hohlkörper des zweiten Bauteils vorgesehenen Rastöffnung eine Rastverbindung eingehen. Ebenso ist es möglich, dass der Rasthaken in dem Hohlkörper des zweiten Formstücks ausgebildet ist und eine Rastverbindung mit einer an der Außenseite des Verriegelungselements vorgesehenen Öffnung eine Rastverbindung eingeht.

Gemäß einer Ausführungsform ist ein Mittel zur Anbringung des Verriegelungselements an einer tragenden Struktur vorgesehen. Bei der tragenden Struktur kann es sich zum Beispiel um eine Badezimmerwand, insbesondere eine Duschwand, oder eine Hauswand handeln.

Gemäß einer weiteren Ausführungsform umfasst das erste Formstück eine erste äußere Mantelfläche und das zweite Formstück eine zweite äußere Mantelfläche, wobei die erste Mantelfläche zumindest im Bereich der ersten Stirnseite im Querschnitt gesehen eine erste Mantelflächenkontur mit einem ersten Umfang aufweist und die zweite Mantelfläche zumindest im Bereich der mindestens einen Aufnahmeöffnung im Querschnitt gesehen eine zweite Mantelflächenkontur mit einem zweiten Umfang aufweist.

Es versteht sich, dass die erste Mantelflächenkontur und die zweite Mantelflächenkontur grundsätzlich beliebige runde oder eckige Formen annehmen können, wobei symmetrische Konturen, wie beispielsweise regelmäßige Polygone oder Kreise, besonders bevorzugt sind.

Grundsätzlich können sich die erste Mantelflächenkontur und der erste Umfang von der zweiten Mantelflächenkontur und dem zweiten Umfang unterscheiden. Vorzugsweise sind die erste Mantelflächenkontur und die zweite Mantelflächenkontur sowie der erste Umfang und der zweite Umfang jedoch zumindest annähernd identisch.

Von Vorteil ist, wenn die erste Mantelfläche zumindest im Bereich der ersten Stirnseite parallel zu einer Längsmittelachse des ersten Formstücks verläuft und/oder die zweite Mantelfläche zumindest im Bereich der mindestens einen Aufnahmeöffnung parallel zu einer Längsmittelachse des zweiten Formstücks verläuft.

Um zu einem einheitlichen und nahtlosen Erscheinungsbild der Verbindungsstelle beizutragen, ist es vorteilhaft, wenn die erste Stirnseite eine zur zweiten Mantelflächenkontur komplementäre Stirnseitenkontur aufweist, so dass im zusammengebauten Zustand der Eckverbindung die erste Stirnseite zumindest bereichsweise formschlüssig an der zweiten Mantelfläche anliegt.

Gemäß einer besonders bevorzugten Ausführungsform weist das zweite Formstück eine runde, insbesondere eine kreisförmige, zweite Mantelflächenkontur auf.

Entsprechend kann die erste Stirnseite eine erste Stirnfläche umfassen, die diametral zueinander angeordnete Bereiche mit einem konkaven Krümmungsverlauf und diametral zueinander angeordnete Bereiche mit einem konvexen Krümmungsverlauf aufweist. Dabei liegen zwischen den Bereichen mit konkavem Krümmungsverlauf und den Bereichen mit konvexem Krümmungsverlauf jeweils Wendebereiche vor, wo sich der Krümmungsverlauf ändert.

Damit die erste Stirnfläche an der runden zweiten Mantelflächenkontur formschlüssig anliegt, entspricht der Krümmungsverlauf der konkav gekrümmten Bereiche vorteilhafterweise der Krümmung der zweiten Mantelflächenkontur.

Bevorzugt ist der oder jeder hakenartige Fortsatz in einem Bereich mit konkavem Krümmungsverlauf ausgebildet.

Des Weiteren können die Oberflächennormalen der ersten Stirnfläche in den Bereichen mit konvexem Krümmungsverlauf in einer zu einer Längsmittelachse des ersten Formstücks parallelen Ebene liegen und in einem Abschnitt zwischen einem Wendebereich und einem hakenartigen Fortsatz in Richtung der Längsmittelachse geneigt sein.

Das Erscheinungsbild der Eckverbindung lässt sich dadurch noch weiter verbessern, dass in der zweiten Mantelfläche Aussparungen vorgesehen sind, die zur, insbesondere formschlüssigen, Aufnahme der Bereiche der ersten Stirnfläche mit konvexem Krümmungsverlauf dienen. Dadurch sitzen die Bereiche des ersten Formstücks mit konvexem Krümmungsverlauf nicht auf dem zweiten Formstück auf, sondern können in diese eintauchen.

Zur weiteren Erhöhung der Stabilität der Eckverbindung kann der oder jeder Hakenabschnitt aus einem Kraftaufnahmeabschnitt hervorgehen, der an die Abmessungen einer Aufnahmeöffnung des zweiten Formstücks angepasst ist, um darin formschlüssig aufgenommen zu werden.

Es versteht sich, dass im Bereich einer der ersten Stirnseite gegenüberliegenden Stirnseite des ersten Formstücks und/oder im Bereich einer der zweiten Stirnseite gegenüberliegen Stirnseite des zweiten Formstücks jeweils wenigstens eine weitere erfindungsgemäße Eckverbindung geschaffen werden kann.

Nachfolgend wird die Erfindung rein beispielhaft anhand einer möglichen Ausführungsform unter Bezugnahme auf die beigefügten Zeichnungen beschrieben. Es zeigen:
- Fig. 1: eine perspektivische Explosionsdarstellung einer erfindungsgemäßen Eckverbindung;
- Fig. 2: eine perspektivische Ansicht der Eckverbindung von Fig. 1 im zusammengebauten Zustand;
- Fig. 3: eine Seitenansicht eines ersten Formstücks der Eckverbindung von Fig. 1;
- Fig. 4: eine Detailansicht des ersten Formstücks von Fig. 3;
- Fig. 5: eine Seitenansicht des ersten Formstücks von Fig. 3, um 90° um die Längsmittelachse gedreht;
- Fig. 6: eine Seitenansicht eines zweiten Formstücks der Eckverbindung von Fig. 1;
- Fig. 7: eine Seitenansicht des zweiten Formstücks von Fig. 6, um 90°um die Längsmittelachse gedreht; und
- Fig. 8: eine Explosionsdarstellung eines Verriegelungselements der Eckverbindung von Fig. 1.

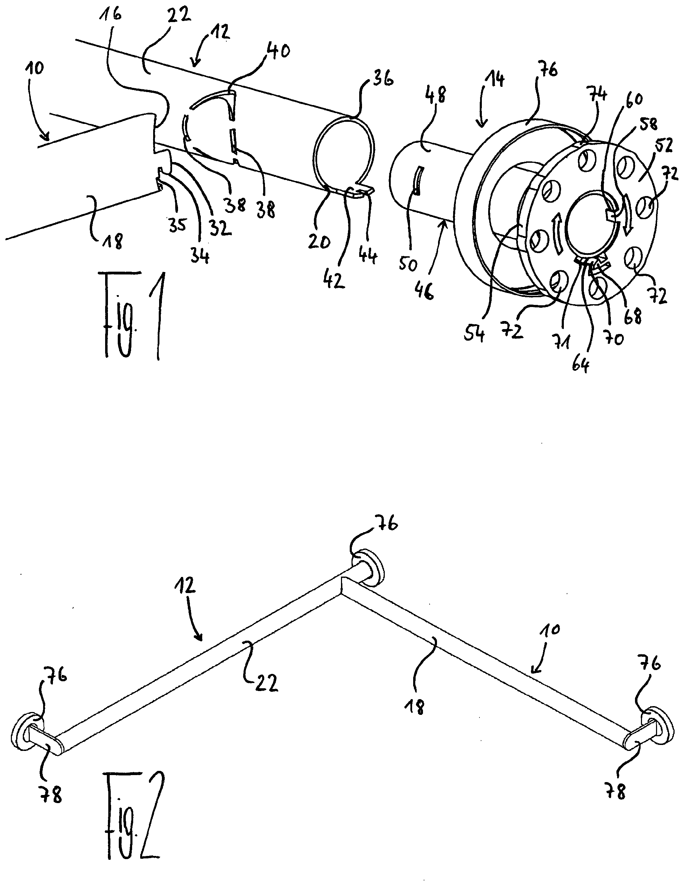

Fig. 1 und 2 zeigen eine erfindungsgemäße Eckverbindung, die ein erstes Formstück 10, ein zweites Formstück 12 sowie ein Verriegelungselement 14 umfasst. Die Formstücke 10, 12 sind als längliche rohrförmige Hohlkörper ausgebildet und können beispielsweise als Handläufe dienen, z.B. für sanitäre Einrichtungen. Im vorliegenden Ausführungsbeispiel sind die Formstücke 10, 12 konkret als Handläufe für eine Duschkabine vorgesehen.

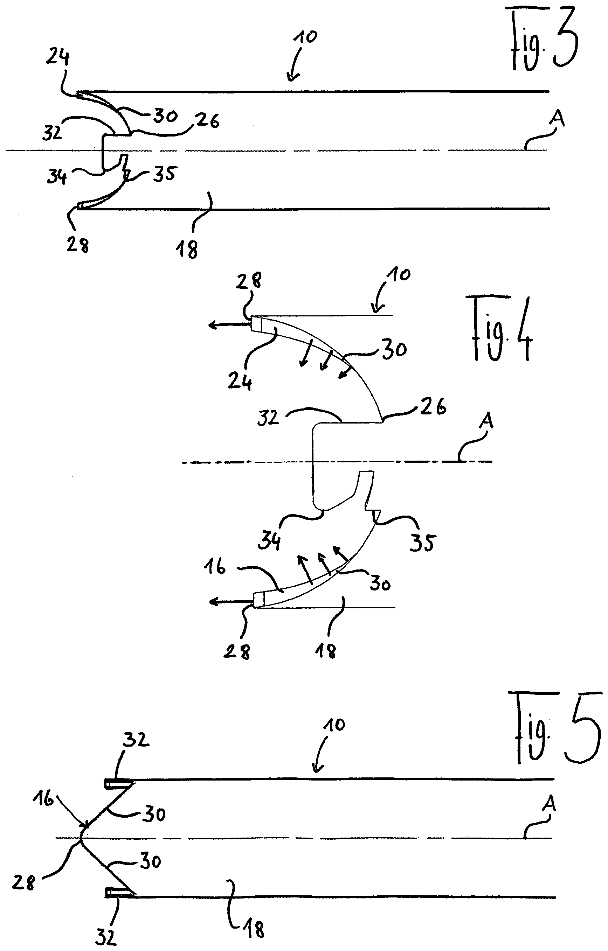

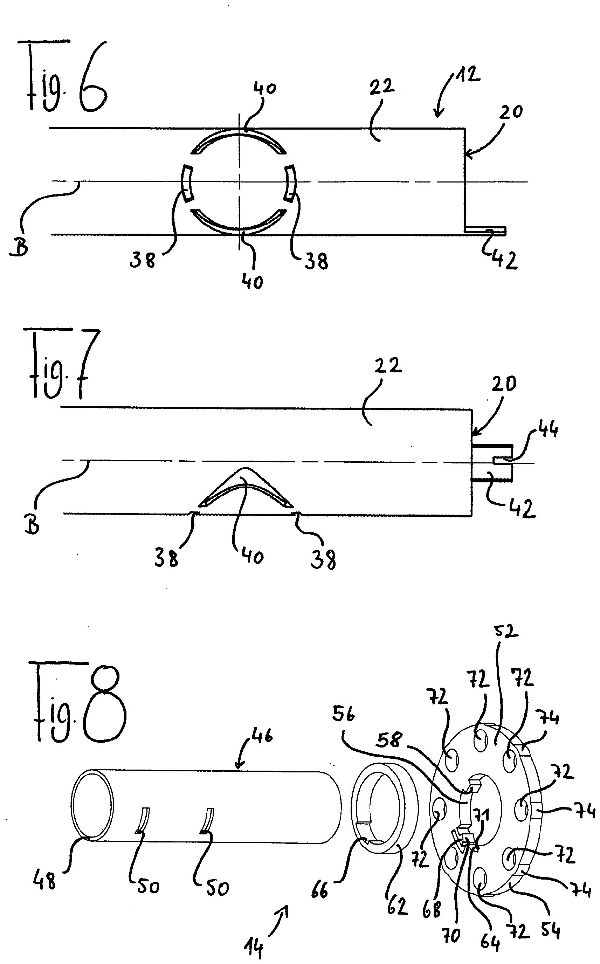

Wie in Fig. 3 bis 5 zu erkennen ist, weist das erste Formstück 10 eine erste Stirnseite 16 und eine zumindest annähernd parallel zu einer Längsmittelachse A des ersten Formstücks 10 verlaufende erste äußere Mantelfläche 18 auf. Das zweite Formstück 12 umfasst entsprechend eine zweite Stirnseite 20 und eine zumindest annähernd parallel zu einer Längsmittelachse B des zweiten Formstücks 12 verlaufende zweite äußere Mantelfläche 22 (Fig. 6 und 7).

Die erste Mantelfläche 18 weist eine im Querschnitt gesehen kreisförmige erste Mantelflächenkontur mit einem ersten Umfang auf, und die zweite Mantelfläche 22 weist eine im Querschnitt gesehen kreisförmige zweite Mantelflächenkontur mit einem zweiten Umfang auf. Im dargestellten Ausführungsbeispiel sind die erste Mantelflächenkontur und die zweite Mantelflächenkontur sowie der erste Umfang und der zweite Umfang zumindest annähernd identisch. Es versteht sich jedoch, dass die Formstücke 10, 12 grundsätzlich auch unterschiedliche Mantelflächenkonturen und/oder unterschiedliche Umfänge aufweisen können.

Wie anhand von Fig. 3 bis 5 zu erkennen ist, geht die erste Mantelfläche 18 an der ersten Stirnseite 16 in eine Stirnfläche 24 über. Die Stirnfläche 24 weist Bereiche 26 mit einem konkaven Krümmungsverlauf auf, der an die Krümmung der zweiten Mantelfläche 22 des zweiten Formstücks 12 angepasst ist. Ferner bildet die Stirnfläche 24 Bereiche 28 mit einem konvexen Krümmungsverlauf aus. Zwischen den Bereichen 26 mit konkavem Krümmungsverlauf und den Bereichen 28 mit konvexem Krümmungsverlauf liegen Wendebereiche 30 vor, wo sich der Krümmungsverlauf ändert. Die Stirnfläche 24 weist demnach in Umfangsrichtung gesehen alternierend Bereiche 26 mit konkavem Krümmungsverlauf und Bereiche 28 mit konvexem Krümmungsverlauf auf.

In dem vorliegenden Ausführungsbeispiel liegen an der ersten Stirnseite 16 zwei diametral zueinander angeordnete Bereiche 26 mit konkavem Krümmungsverlauf und zwei diametral zueinander angeordnete Bereiche 28 mit konvexem Krümmungsverlauf vor. Somit sind die Bereiche 26 mit konkavem Krümmungsverlauf jeweils um 90° um die Längsmittelachse A des ersten Formstücks 10 versetzt zu den Bereichen 26 mit konkavem Krümmungsverlauf angeordnet.

In jedem Bereich 26 mit konkavem Krümmungsverlauf ist jeweils ein hakenartiger Fortsatz 32 ausgebildet, der zumindest annähernd parallel zur Längsmittelachse A des ersten Formstücks 10 verläuft. Im Querschnitt betrachtet, beschreiben die hakenartigen Fortsätze 32 aufgrund der runden Mantelflächenkontur des ersten Formstücks 10 einen Kreisringabschnitt. Jeder hakenartige Fortsatz 32 umfasst einen Hakenabschnitt 34, der aus einem Kraftaufnahmeabschnitt 35 hervorgeht.

Ausgehend von den Wendebereichen 30 ist die Stirnfläche 24 bis zu den hakenartigen Fortsätzen 32 in Richtung der Längsmittelachse A des ersten Formstücks 10 nach Innen abgeschrägt. Anders ausgedrückt sind die Oberflächennormalen hier in Richtung der Längsmittelachse A des ersten Formstücks 10 geneigt, was in Fig. 4 durch die zur Längsmittelachse A geneigten und kürzer werdenden Pfeile angedeutet ist, die eine Projektion der Oberflächennormalen auf die Papierebene darstellen. In den Bereichen 28 mit konvexem Krümmungsverlauf liegen die Oberflächennormalen hingegen in einer zur Längsmittelachse A parallelen Ebene.

Fig. 6 ist eine Seitenansicht des zweiten Formstücks 12. Durch eine den Hohlkörper des zweiten Formstücks 12 umgebende Mantelwand 36 erstrecken sich schlitzförmige Aufnahmeöffnungen 38, die an die Querschnitte der Kraftaufnahmeabschnitte 35 angepasst sind und demzufolge ebenfalls jeweils einen Kreisringabschnitt beschreiben, um im zusammengebauten Zustand der Eckverbindung die Kraftaufnahmeabschnitte 35 der hakenartigen Fortsätze 32 formschlüssig aufzunehmen. Durch diesen Formschluss werden im zusammengebauten Zustand der Eckverbindung auftretende Querkräfte unmittelbar von dem ersten Formstück 10 auf das zweite Formstück 12 oder umgekehrt übertragen.

Wie in Fig. 6 und Fig. 7 zu sehen ist, sind in der Mantelwand 36 des zweiten Formstücks 12 ferner Aussparungen 40 vorgesehen, die zur Aufnahme der Bereiche 28 der Stirnfläche 24 des ersten Formstücks 10 dienen, die einen konvexen Krümmungsverlauf aufweisen. Die Aussparungen 40 sind zu den Bereichen 28 mit konvexem Krümmungsverlauf im Wesentlichen komplementär ausgebildet.

Überdies erstreckt sich von der Stirnseite 20 des zweiten Formstücks 12 in Richtung der Längsmittelachse B des zweiten Formstücks 12 eine Zunge 42, die eine Rastöffnung 44 in Form einer Nut aufweist. Dabei ist die Rastöffnung 44, wie anhand von Fig. 7 zu erkennen ist, asymmetrisch in Bezug auf eine Ebene angeordnet, die durch die Längsmittelachse B und mittig durch die Zunge 42 verläuft. Die Zunge 42 beschreibt aufgrund der runden Mantelflächenkontur des zweiten Formstücks 12 im Querschnitt gesehen einen Kreisringabschnitt.

Um das erste Formstück 10 an dem zweiten Formstück 12 zu sichern, ist ein Verriegelungselement 14 vorgesehen, welches in einer Explosionsdarstellung in Fig. 8 gezeigt ist. Das Verriegelungselement 14 umfasst einen hohlzylinderförmigen Abschnitt 46 mit einer Zylinderwand 48. Der hohlzylinderförmige Abschnitt 46 weist einen Außendurchmesser auf, der an den Innendurchmesser des Hohlkörpers des zweiten Formstücks 12 angepasst ist.

In der Zylinderwand 48 sind schlitzförmige Verriegelungsöffnungen 50 ausgebildet, die in einer Vormontagelage mit den Aufnahmeöffnungen 38 des zweiten Formstücks 12 fluchtend ausrichtbar sind. Ähnlich wie die Aufnahmeöffnungen 38 des zweiten Formstücks 12 beschreiben auch die Verriegelungsöffnungen 50 des Verriegelungselements 14 jeweils einen Kreisringabschnitt.

Der hohlzylinderförmigen Abschnitt 46 des Verriegelungselements 14 geht an seinem dem zweiten Formstück 12 abgewandten Ende in einen Flansch 52 über, der sich von dem hohlzylinderförmigen Abschnitt 46 radial nach außen erstreckt und eine äußere Flanschumfangfläche 54 sowie im Bereich des hohlzylinderförmigen Abschnitts 46 eine innere Flanschumfangfläche 56 aufweist. Dabei stellen der hohlzylinderförmige Abschnitt 46 und der Flansch 52 zunächst Einzelteile dar, die zur Herstellung des Verriegelungselements 14 stoffschlüssig gefügt werden, zum Beispiel verklebt oder verschweißt werden.

Um einen korrekten Zusammenbau des hohlzylinderförmigen Abschnitts 46 und des Flansches 52 zu ermöglichen, ist an der inneren Flanschumfangfläche 56 ein radial nach innen ragendes Kodierelement 58 vorgesehen, das im korrekt zusammengebauten Zustand des Verriegelungselements 14 formschlüssig mit einer zum Kodierelement 58 komplementären Kodieraussparung 60 des hohlzylinderförmigen Abschnitts 46 in Eingriff steht (Fig. 1). Es versteht sich, dass das Kodierelement 58 auch an der Zylinderwand 48 und die Kodieraussparung 60 an der inneren Flanschumfangfläche 56 ausgebildet sein können. Ferner ist zur Stabilisierung ein Ring 62 vorgesehen, der den hohlzylinderförmigen Abschnitt 46 umgibt und an dem Flansch 52 anliegt.

In die innere Flanschumfangfläche 56 ist ein ringsegmentförmiger Durchgang 64 eingeformt, dessen radiale Abmessung, d.h. Tiefe, an die Wandstärke der Zunge 42 angepasst ist und dessen Abmessung in Umfangsrichtung gesehen größer ist als die Breite der Zunge 42. Damit der Durchgang 64 nicht von dem Ring 62 versperrt wird, weist der Ring 62 eine ringsegmentförmige Aussparung 66 auf, die mit dem Durchgang 64 ausgerichtet ist.

In dem Durchgang 64 ist ein federnd gelagerter Rasthaken 68 ausgebildet. Der Rasthaken 68 dient dazu, im zusammengebauten Zustand der Eckverbindung mit der Rastöffnung 44 der Zunge 42 form- und/oder kraftschlüssig in Eingriff zu stehen, um so das Verriegelungselement 14 gegen unbeabsichtigtes Entriegeln zu sichern. Um das Einrasten zu erleichtern, ist der Rasthaken 68 an seinem beweglichen Ende 70 abgeschrägt. Dem beweglichen Ende 70 gegenüberliegend ist der Durchgang 64 durch eine Schulter 71 begrenzt.

Durch den Flansch 52 verlaufen in Längsrichtung des Verriegelungselements 14 Bohrungen 72, die zur Aufnahme von nicht dargestellten Befestigungsmitteln dienen, wie z.B. Schrauben, so dass das Verriegelungselement 14 an einer nicht dargestellten tragenden Struktur, wie zum Beispiel einer Wand, befestigt werden kann. Der in Fig. 1 dargestellte Flansch 52 weist acht entlang eines Kreisrings gleichverteilte Bohrungen 72 auf, es kann aber auch eine andere Anzahl von Bohrungen 72 verwendet werden. Alternativ oder zusätzlich kann der Flansch 52 auch stoffschlüssig an der tragenden Struktur befestigt werden, z.B. mit dieser verklebt werden. Im Falle einer rein stoffschlüssigen Verbindung könnte man auf die Bohrungen 72 verzichten.

Des Weiteren sind an der äußeren Flanschumfangfläche 54 Auswölbungen 74 vorgesehen, die zur kraftschlüssigen Aufnahme einer Zierrosette 76 dienen, welche den Flansch 52 abdeckt. Im vorliegenden Ausführungsbeispiel sind acht Auswölbungen 74 vorgesehen, die in Umfangsrichtung entlang der äußeren Flanschumfangfläche 54 gleichverteilt angeordnet sind und deren Wölbungsmaxima mit den Mittelpunkten der Bohrungen 72 radial auf einer Linie liegen. Selbstverständlich kann die Anzahl der Auswölbungen 74 von acht abweichen. Insbesondere können die Anzahl der Bohrungen 72 und die Anzahl der Auswölbungen 74 unterschiedlich sein. Es versteht sich außerdem, dass die Bohrungen 72 und die Auswölbungen 74 nicht gleichverteilt angeordnet sein müssen.

Nachfolgend wird beschrieben, wie der Zusammenbau der Eckverbindung erfolgt. Zunächst wird das Verriegelungselement 14 in den Hohlkörper des zweiten Formstücks 12 eingeführt, wobei die an der zweiten Stirnseite 20 ausgebildete Zunge 42 so in den Durchgang 64 eingeführt wird, dass die Zunge 42 zwischen dem Rasthaken 68 und der Schulter 71 liegt. Auf diese Weise sorgt der Durchgang 64 zusammen mit der Zunge 42 für eine korrekte Orientierung des Verriegelungselements 14 relativ zu dem zweiten Formstück 12 in einer Vormontagelage, d.h. für ein korrektes Einführen des Verriegelungselements 14 in den Hohlkörper des zweiten Formstücks 12 derart, dass die Aufnahmeöffnungen 38 des zweiten Formstücks 12 mit den Verriegelungsöffnungen 50 des Verriegelungselements 14 fluchtend ausgerichtet sind.

Im nächsten Schritt wird die erste Stirnseite 16 des ersten Formstücks 10 derart an die zweite Mantelfläche 22 des zweiten Formstücks 12 angesetzt, dass die Bereiche 28 mit konvexem Krümmungsverlauf in die Aussparungen 40 eintauchen und die hakenartigen Fortsätze 32 des ersten Formstücks 10 in die Öffnungen 38, 50 sowohl des zweiten Formstücks 12 als auch des Verriegelungselements 14 eingreifen. Durch Verdrehen des Verriegelungselements 14 um die Längsmittelachse B des zweiten Formstücks 12, hier im Uhrzeigersinn, werden die Hakenabschnitte 34 in einer Verriegelungslage des Verriegelungselements 14 von dem Verriegelungselement 14 hintergriffen, wodurch das erste Formstück 10 an dem zweiten Formstück 12 verriegelt wird. Gleichzeitig rastet der Rasthaken 68 in die Rastöffnung 44 ein, so dass das Verriegelungselement 14 in seiner Verriegelungslage fixiert ist und somit eine dauerhafte Verbindung zwischen dem ersten Formstück 10 und dem zweiten Formstück 12 hergestellt ist. Selbstverständlich können die hakenartigen Fortsätze 32 sowie der Rasthaken 68 und die Rastöffnung 44 derart ausgebildet sein, dass ein Verdrehen des Verriegelungselements 14 um die Längsmittelachse B des zweiten Formstücks 12 entgegen dem Uhrzeigersinn zu einer Verriegelung führt. Es versteht sich ferner, dass die Rastverbindung zwischen dem Rasthaken 68 und der Rastöffnung 44 zum Zweck der Demontage der Eckverbindung gelöst werden kann.

Die derart miteinander verbundenen Formstücke 10, 12 können nun mit Hilfe des Flansches 52 an einer hier nicht dargestellten tragenden Struktur angebracht werden. Zusätzlich sind an den der Eckverbindung abgewandten Stirnseiten der Formstücke 10, 12 Halterungen 78 zur Befestigung der Formstücke 10, 12 an der oder einer anderen tragenden Struktur vorgesehen. Die Halterungen 78 können ebenfalls mit Zierrosetten 76 versehen sein.

Bei der in Fig. 2 dargestellten Eckverbindung beträgt der Winkel zwischen dem zweiten Formstück 12 und dem ersten Formstück 10 90°. Bei entsprechender Ausbildung der ersten Stirnseite 16 des ersten Formstücks 10 und gegebenenfalls daran angepasster Ausbildung der Aufnahmeöffnungen 38 in der Mantelwand 36 des zweiten Formstücks 12 ist es grundsätzlich aber auch möglich, die Formstücke 10, 12 schräg miteinander zu verbinden, d.h. unter einem Winkel von ungleich 90°.

### Bezugszeichenliste

- 10: erstes Formstück
- 12: zweites Formstück
- 14: Verriegelungselement
- 16: erste Stirnseite
- 18: erste Mantelfläche
- 20: zweite Stirnseite
- 22: zweite Mantelfläche
- 24: Stirnfläche
- 26: Bereich mit konkavem Krümmungsverlauf
- 28: Bereich mit konvexem Krümmungsverlauf
- 30: Wendebereich
- 32: hakenartiger Fortsatz
- 34: Hakenabschnitt
- 35: Kraftaufnahmeabschnitt
- 36: Mantelwand
- 38: Aufnahmeöffnung
- 40: Aussparung
- 42: Zunge
- 44: Rastöffnung
- 46: hohlzylinderförmiger Abschnitt
- 48: Zylinderwand
- 50: Verriegelungsöffnung
- 52: Flansch
- 54: äußere Flanschumfangfläche
- 56: innere Flanschumfangfläche
- 58: Kodierelement
- 60: Kodieraussparung
- 62: Ring
- 64: Durchgang
- 66: ringsegmentförmige Aussparung
- 68: Rasthaken
- 70: bewegliches Ende
- 71: Schulter
- 72: Bohrung
- 74: Auswölbungen
- 76: Zierrosette
- 78: Halterung
- A: Längsmittelachse
- B: Längsmittelachse

## Patentansprüche

1. Eckverbindung umfassend:
ein erstes Formstück (10) mit einer ersten Stirnseite (16), wobei sich mindestens ein hakenartiger Fortsatz (32) von der ersten Stirnseite (16) erstreckt; und
ein zweites Formstück (12) mit einer zweiten Stirnseite (20), wobei das zweite Formstück (12) einen von der zweiten Stirnseite (20) ausgehenden Hohlraum und eine den Hohlraum definierende Mantelwand (36) aufweist, die mit mindestens einer Aufnahmeöffnung (38) versehen ist, die zur Aufnahme eines hakenartigen Fortsatzes (32) dient;
**gekennzeichnet durch**
ein Verriegelungselement (14), das in dem Hohlraum des zweiten Formstücks (12) drehbar gelagert aufnehmbar ist und das mindestens eine Verriegelungsöffnung (50) aufweist, die in einer Vormontagelage des Verriegelungselements (14) mit einer Aufnahmeöffnung (38) des zweiten Formstücks (12) fluchtend ausgerichtet ist, um den in der Aufnahmeöffnung (38) aufgenommenen hakenartigen Fortsatz (32) aufzunehmen, wobei durch Verdrehen des Verriegelungselements (14) in eine Verriegelungslage ein Hakenabschnitt (34) des hakenartigen Fortsatzes (32) von dem Verriegelungselement (14) hintergriffen wird, um das erste Formstück (10) an dem zweiten Formstück (12) zu verriegeln.

2. Eckverbindung nach Anspruch 1,
**gekennzeichnet durch**
Rastmittel zur Fixierung des Verriegelungselements (14) in der Verriegelungslage.

3. Eckverbindung nach Anspruch 2,
**dadurch gekennzeichnet, dass**
die Rastmittel mindestens eine Rastöffnung (44), insbesondere an dem zweiten Formstück (12), und mindestens einen federnd gelagerten Rasthaken (68), insbesondere an dem Verriegelungselement (14), umfassen.

4. Eckverbindung nach zumindest einem der vorherigen Ansprüche,
**gekennzeichnet durch**
ein Mittel zur Anbringung des Verriegelungselements (14) an einer tragenden Struktur.

5. Eckverbindung nach zumindest einem der vorherigen Ansprüche,
**dadurch gekennzeichnet, dass**
das erste Formstück (10) eine erste äußere Mantelfläche (18) und das zweite Formstück (12) eine zweite äußere Mantelfläche (22) umfassen, wobei die erste Mantelfläche (18) zumindest im Bereich der ersten Stirnseite (16) im Querschnitt gesehen eine erste Mantelflächenkontur mit einem ersten Umfang aufweist und die zweite Mantelfläche (22) zumindest im Bereich der mindestens einen Aufnahmeöffnung (38) im Querschnitt gesehen eine zweite Mantelflächenkontur mit einem zweiten Umfang aufweist.

6. Eckverbindung nach Anspruch 5,
**dadurch gekennzeichnet, dass**
die erste Mantelfläche (18) zumindest im Bereich der ersten Stirnseite (16) parallel zu einer Längsmittelachse (A) des ersten Formstücks (10) verläuft und/oder die zweite Mantelfläche (22) zumindest im Bereich der mindestens einen Aufnahmeöffnung (38) parallel zu einer Längsmittelachse (B) des zweiten Formstücks (12) verläuft.

7. Eckverbindung nach Anspruch 5 oder 6,
**dadurch gekennzeichnet, dass**
die erste Mantelflächenkontur und die zweite Mantelflächenkontur sowie der erste Umfang und der zweite Umfang zumindest annähernd identisch sind.

8. Eckverbindung nach zumindest einem der Ansprüche 5 bis 7,
**dadurch gekennzeichnet, dass**
die erste Stirnseite (16) eine zur zweiten Mantelflächenkontur komplementäre Stirnseitenkontur aufweist, so dass im zusammengebauten Zustand der Eckverbindung die erste Stirnseite (16) zumindest bereichsweise formschlüssig an der zweiten Mantelfläche (22) anliegt.

9. Eckverbindung nach zumindest einem der Ansprüche 5 bis 8,
**dadurch gekennzeichnet, dass**
das zweite Formstück (12) eine runde, insbesondere eine kreisförmige, zweite Mantelflächenkontur aufweist.

10. Eckverbindung nach Anspruch 5 und 9,
**dadurch gekennzeichnet, dass**
die erste Stirnseite (16) eine erste Stirnfläche (24) umfasst, die diametral zueinander angeordnete Bereiche (26) mit einem konkaven Krümmungsverlauf und diametral zueinander angeordnete Bereiche (28) mit einem konvexen Krümmungsverlauf aufweist, wobei zwischen den Bereichen (26) mit konkavem Krümmungsverlauf und den Bereichen (28) mit konvexem Krümmungsverlauf jeweils Wendebereiche (30) vorliegen, wo sich der Krümmungsverlauf ändert.

11. Eckverbindung nach Anspruch 10,
**dadurch gekennzeichnet, dass**
der Krümmungsverlauf der konkav gekrümmten Bereiche (26) der Krümmung der zweiten Mantelflächenkontur entspricht.

12. Eckverbindung nach Anspruch 10 oder 11,
**dadurch gekennzeichnet, dass**
der oder jeder hakenartige Fortsatz (32) in einem Bereich (26) mit konkavem Krümmungsverlauf ausgebildet ist.

13. Eckverbindung nach Anspruch 12,
**dadurch gekennzeichnet, dass**
die Oberflächennormalen der ersten Stirnfläche (24) in den Bereichen (28) mit konvexem Krümmungsverlauf in einer zu einer Längsmittelachse (A) des ersten Formstücks (10) parallelen Ebene liegen und in einem Abschnitt zwischen einem Wendebereich (30) und einem hakenartigen Fortsatz (32) in Richtung der Längsmittelachse (A) geneigt sind.

14. Eckverbindung nach zumindest einem der Ansprüche 10 bis 13,
**dadurch gekennzeichnet, dass**
in der zweiten Mantelfläche (22) Aussparungen (40) vorgesehen sind, die zur, insbesondere formschlüssigen, Aufnahme der Bereiche (28) der ersten Stirnfläche (24) mit konvexem Krümmungsverlauf dienen.

15. Eckverbindung nach zumindest einem der vorstehenden Ansprüche,
**dadurch gekennzeichnet, dass**
der oder jeder Hakenabschnitt (34) aus einem Kraftaufnahmeabschnitt (35) hervorgeht, der an die Abmessungen der mindestens einen Aufnahmeöffnung (38) des zweiten Formstücks (12) angepasst ist, um darin formschlüssig aufgenommen zu werden.

## Claims

1. A corner connection comprising:
a first molded part (10) having a first end face (16), with at least one hook-like prolongation (32) extending from the first end face (16); and
a second molded part (12) having a second end face (20), with the second molded part (12) having a hollow space starting from the second end face (20) and a jacket wall (36) which defines the hollow space and which is provided with at least one reception opening (38) which serves to receive a hook-like prolongation (32),
**characterized by**
a locking element (14) which can be received in a rotatably supported manner in the hollow space of the second molded part (12) and which has at least one locking opening (50) which is aligned flush with a reception opening (38) of the second molded part (12) in a pre-assembly position of the locking element (14) to receive the hook-like prolongation (32) received in the reception opening (38), with a hook section (34) of the hook-like prolongation (32) being engaged behind by the locking element (14) by a rotation of the locking element (14) into a locked position to lock the first molded part (10) to the second molded part (12).

2. A corner connection in accordance with claim 1,
**characterized by**
latching means for fixing the locking element (14) in the locked position.

3. A corner connection in accordance with claim 2,
**characterized in that**
the latching means comprise at least one latching opening (44), in particular at the second molded part (12), and at least one resiliently supported latching hook (68), in particular at the locking element (14).

4. A corner connection in accordance with at least one of the preceding claims,
**characterized by**
means for attaching the locking element (14) to a supporting structure.

5. A corner connection in accordance with at least one of the preceding claims,
**characterized in that**
the first molded part (10) comprises a first outer jacket surface (18) and the second molded part (12) comprises a second outer jacket surface (22), with the first jacket surface (18), viewed in cross-section, having a first jacket surface contour comprising a first periphery at least in the region of the first end face (16), and with the second jacket surface (22), viewed in cross-section, having a second jacket surface contour comprising a second periphery at least in the region of the at least one reception opening (38).

6. A corner connection in accordance with claim 5,
**characterized in that**
the first jacket surface (18) extends in parallel with a longitudinal central axis (A) of the first molded part (10) at least in the region of the first end face (16) and/or the second jacket surface (22) extends in parallel with a longitudinal central axis (B) of the second molded part (12) at least in the region of the at least one reception opening (38).

7. A corner connection in accordance with claim 5 or claim 6,
**characterized in that**
the first jacket surface contour and the second jacket surface contour as well as the first periphery and the second periphery are at least approximately identical.

8. A corner connection accordance with at least one of the claims 5 to 7,
**characterized in that**
the first end face (16) has an end-face contour which is complementary to the second jacket surface contour such that the first end face (16) at least regionally contacts the second jacket surface (22) in a form-fitting manner in an assembled state of the corner connection.

9. A corner connection accordance with at least one of the claims 5 to 8,
**characterized in that**
the second molded part (12) has a round second jacket surface contour which is in particular circular.

10. A corner connection in accordance with claim 5 and claim 9,
**characterized in that**
the first end face (16) comprises a first end surface (24) which has regions (26) arranged diametrically with respect to one another and having a concave extent of curvature and which has regions (28) arranged diametrically with respect to one another and having a convex extent of curvature, with respective turning regions (30) where the extent of curvature changes being present between the regions (26) having a concave extent of curvature and the regions (28) having a convex extent of curvature.

11. A corner connection in accordance with claim 10,
**characterized in that**
the extent of curvature of the concavely curved regions (26) corresponds to the curvature of the second jacket surface contour.

12. A corner connection in accordance with claim 10 or claim 11,
**characterized in that**
the or each hook-like prolongation (32) is formed in a region (26) having a concave extent of curvature.

13. A corner connection in accordance with claim 12,
**characterized in that**
the surface normals of the first end surface (24) lie in a plane in parallel with a longitudinal central axis (A) of the first molded part (10) in the regions (28) having a convex extent of curvature and are inclined in the direction of the longitudinal central axis (A) in a section between a turning region (30) and a hook-like prolongation (32).

14. A corner connection accordance with at least one of the claims 10 to 13,
**characterized in that**
cut-outs (40) are provided in the second jacket surface (22) which serve for the reception, in particular the form-fitting reception, of the regions (28) of the first end surface (24) having a convex extent of curvature.

15. A corner connection in accordance with at least one of the preceding claims,
**characterized in that**
the or each hook section (34) results from a force-absorbing section (35) which is adapted to the dimensions of the at least one reception opening (38) of the second molded part (12) to be received therein in a form-fitting manner.

## Revendications

1. Raccord d'angle comprenant :
une première pièce façonnée (10) ayant un premier côté frontal (16), au moins un prolongement (32) en forme de crochet s'étendant depuis ledit premier côté frontal (16) ; et
une deuxième pièce façonnée (12) ayant un deuxième côté frontal (20), la deuxième pièce façonnée (12) présentant une cavité partant du deuxième côté frontal (20) et une paroi enveloppe (36) définissant la cavité et munie d'au moins une ouverture de réception (38) qui sert à recevoir un prolongement (32) en forme de crochet ;
**caractérisé par**
un élément de verrouillage (14) qui peut être reçu dans la cavité de la deuxième pièce façonnée (12) en étant monté de façon mobile en rotation et qui présente au moins une ouverture de verrouillage (50) qui, dans une position de pré-montage de l'élément de verrouillage (14), est orientée en alignement avec une ouverture de réception (38) de la deuxième pièce façonnée (12) de manière à recevoir le prolongement (32) en forme de crochet reçu dans l'ouverture de réception (38), une partie de crochet (34) du prolongement (32) en forme de crochet étant engagée par l'arrière par l'élément de verrouillage (14) par une rotation de l'élément de verrouillage (14) jusque dans une position de verrouillage, afin de verrouiller la première pièce façonnée (10) sur la deuxième pièce façonnée (12).

2. Raccord d'angle selon la revendication 1,
**caractérisé par**
des moyens d'enclenchement pour fixer l'élément de verrouillage (14) dans la position de verrouillage.

3. Raccord d'angle selon la revendication 2,
**caractérisé en ce que**
les moyens d'enclenchement présentent au moins une ouverture d'enclenchement (44), en particulier sur la deuxième pièce façonnée (12), et au moins un crochet d'enclenchement (68) monté avec effet ressort, en particulier sur l'élément de verrouillage (14).

4. Raccord d'angle selon l'une au moins des revendications précédentes,
**caractérisé par**
un moyen pour monter l'élément de verrouillage (14) sur une structure porteuse.

5. Raccord d'angle selon l'une au moins des revendications précédentes,
**caractérisé en ce que**
la première pièce façonnée (10) présente une première surface enveloppe extérieure (18) et la deuxième pièce façonnée (12) présente une deuxième surface enveloppe extérieure (22), la première surface enveloppe (18) présentant, au moins dans la zone du premier côté frontal (16), vu en coupe transversale, un premier contour de surface enveloppe ayant un premier pourtour, et la deuxième surface enveloppe (22) présentant, au moins dans la zone de ladite au moins une ouverture de réception (38), vue en coupe transversale, un deuxième contour de surface enveloppe ayant un deuxième pourtour.

6. Raccord d'angle selon la revendication 5,
**caractérisé en ce que**
la première surface enveloppe (18) s'étend parallèlement à un axe médian longitudinal (A) de la première pièce façonnée (10), au moins dans la zone du premier côté frontal (16), et/ou la deuxième surface enveloppe (22) s'étend parallèlement à un axe médian longitudinal (B) de la deuxième pièce façonnée (12), au moins dans la zone de ladite au moins ouverture de réception (38).

7. Raccord d'angle selon la revendication 5 ou 6,
**caractérisé en ce que**
le premier contour de surface enveloppe et le deuxième contour de surface enveloppe ainsi que le premier pourtour et le deuxième pourtour sont au moins approximativement identiques.

8. Raccord d'angle selon l'une au moins des revendications 5 à 7,
**caractérisé en ce que**
le premier côté frontal (16) présente un contour de côté frontal complémentaire au deuxième contour de surface enveloppe, de sorte que dans l'état assemblé du raccord d'angle, le premier côté frontal (16) s'appuie au moins localement en coopération de forme contre la deuxième surface enveloppe (22).

9. Raccord d'angle selon l'une au moins des revendications 5 à 8,
**caractérisé en ce que**
la deuxième pièce façonnée (12) présente un deuxième contour de surface enveloppe rond, en particulier circulaire.

10. Raccord d'angle selon la revendication 5 et 9,
**caractérisé en ce que**
le premier côté frontal (16) présente une première surface frontale (24) qui présente des zones (26) disposées diamétralement l'une à l'autre et ayant un tracé de courbure concave, et des zones (28) disposées diamétralement l'une à l'autre et ayant un tracé de courbure convexe, des zones de changement respectives (30) se situant entre les zones (26) ayant un tracé de courbure concave et les zones (28) ayant un tracé de courbure convexe, là où le tracé de courbure change.

11. Raccord d'angle selon la revendication 10,
**caractérisé en ce que**
le tracé de courbure des zones (26) incurvées en forme concave correspond à la courbure du deuxième contour de surface enveloppe.

12. Raccord d'angle selon la revendication 10 ou 11,
**caractérisé en ce que**
le ou chaque prolongement (32) en forme de crochet est réalisé dans une zone (26) ayant un tracé de courbure concave.

13. Raccord d'angle selon la revendication 12,
**caractérisé en ce que**
dans les zones (28) ayant un tracé de courbure convexe, les normales à la première surface frontale (24) se trouvent dans un plan parallèle à un axe médian longitudinal (A) de la première pièce façonnée (10), et dans une partie située entre une zone de changement (30) et un prolongement (32) en forme de crochet, elles sont inclinées en direction de l'axe médian longitudinal (A).

14. Raccord d'angle selon l'une au moins des revendications 10 à 13,
**caractérisé en ce que**
des échancrures (40) sont prévues dans la deuxième surface enveloppe (22), qui servent à recevoir en particulier par coopération de forme les zones (28) de la première surface frontale (24) ayant un tracé de courbure convexe.

15. Raccord d'angle selon l'une au moins des revendications précédentes,
**caractérisé en ce que**
la ou chaque partie de crochet (34) part d'une partie de réception de force (35) qui est adaptée aux dimensions de ladite au moins une ouverture de réception (38) de la deuxième pièce façonnée (12), pour être reçue par coopération de forme dans ladite ouverture.
